(19) Europäisches Patentamt
European Patent Office
Office européen des brevets

(11) **EP 3 933 452 A1**

(12) **EUROPEAN PATENT APPLICATION**

(43) Date of publication:
**05.01.2022 Bulletin 2022/01**

(51) Int Cl.:
**G01V 99/00** (2009.01)

(21) Application number: **20305747.6**

(22) Date of filing: **02.07.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **TOTAL SE**
**92400 Courbevoie (FR)**

(72) Inventors:
• **CORNU, Tristan**
  **64018 Pau Cedex (FR)**
• **GOUT, Claude**
  **64018 Pau Cedex (FR)**

(74) Representative: **Lavoix**
  **2, place d'Estienne d'Orves**
  **75441 Paris Cedex 09 (FR)**

(54) **A METHOD FOR COMPUTING A FIRST THERMAL PARAMETER OF A SEDIMENT LAYER IN A PASSIVE MARGIN AREA, ASSOCIATED METHOD, SYSTEM AND COMPUTER PROGRAM**

(57)    The invention relates to a method for computing a first thermal parameter at a predetermined time in a sediment layer (16) of a passive margin area (10). The method comprises the following steps:
- obtaining a geometry of the asthenospheric and lithospheric layers (12, 14) and of the sediment layers (16) of the passive margin area (10) at the current time,
- computing a geometry of the asthenospheric and lithospheric layers (12, 14) for the predetermined time using a rifting model,
- computing a second thermal parameter in the asthenospheric and lithospheric layers (12, 14) for the predetermined time,
- computing a geometry of the sediments layers (16) for the predetermined time using a geodynamic basin model,
- computing the first thermal parameter in the sediment layer (16) for the predetermined time using the computed geometry of the sediment layers (16) and the value of the computed second thermal parameter.

FIG.1

**Description**

The present invention relates to a method for computing a first thermal parameter at a predetermined time of a period of time in at least one sediment layer of a plurality of sediment layers of a passive margin area, said passive margin area comprising an asthenospheric layer covered by a lithospheric layer separated by said asthenospheric layer by a first interface, said lithospheric layer being covered at least partially by said plurality of sediment layers and separated from said plurality of sediment layers by a second interface, the period of time starting at the beginning of the formation of the passive margin area and finishing at the current time, the method being carried out by a system for computing the at least one first thermal parameter

A passive margin area is the transition between oceanic and continental lithosphere. In this area, continents rift apart from each other to become separated by an ocean. This continental rift establishes due to the stretching and the thinning of the crust and of the lithosphere layer by tectonic plates movement. During this phase, the continental crust begins to subside. Subsidence is a gradual downward settling of the continental crust. If the extension process continues, the phenomenon leads to a break-up of the continental crust and to the formation of a new oceanic crust at the mid-ocean ridge. The subsiding continental crust undergoes normal faulting. Then, crustal stretching ceases and the transitional crust (oceanic crust at the intersection between the continental domain and the oceanic domain) and the lithosphere layer subside because of cooling and thickening according to a phenomenon of thermal subsidence.

The plurality of sediment layers settle all along the passive margin area during all the stages of the creation of the passive margin area: syn-tectonic sediments at the early stage of the formation of the passive margin area and post-tectonic sediments at the late stage of the formation of the passive margin area.

Passive margin areas are important exploration targets for oil and gas industry since they are associated with favorable conditions for accumulation and maturation of organic matter contained in the sediments layers, which lead to the development of oil and gas reservoirs.

In that context, the thermal history of the passive margin area is of high interest for petroleum exploration, since this process controls the location and the characteristics of potential oil and gas petroleum systems.

One aim of the invention is to provide an efficient and accurate method for computing a first thermal parameter at a predetermined time of a period of time in at least one sediment layer of a plurality of sediment layers of a passive margin area taking into account the whole history of the development of the passive margin area.

To this aim, the subject-matter of the invention is a method for computing a first thermal parameter at a predetermined time of a period of time in at least one sediment layer of a plurality of sediment layers of a passive margin area, comprising the following steps:

- obtaining a geometry of the asthenospheric and lithospheric layers and of the sediment layers of the passive margin area at the current time,
- computing at least a geometry of the asthenospheric and lithospheric layers for the at least one predetermined time using a rifting model and at least the obtained geometry of the asthenospheric and lithospheric layers at the current time,
- computing a second thermal parameter in the asthenospheric and lithospheric layers for the at least one predetermined time using the computed geometry of the asthenospheric and lithospheric layers,
- computing at least a geometry of the sediments layers for the at least one predetermined time using a geodynamic basin model and at least the geometry of the sediment layers obtained at the current time and the computed geometry of the asthenospheric and lithospheric layers,
- computing the first thermal parameter in the at least one sediment layer of the plurality of sediment layers for the at least one predetermined time using the computed geometry of the sediment layers and the value of the computed second thermal parameter of the lithospheric layer at the second interface between the lithospheric layer and the sediment layers or at the first interface between the lithospheric layer and the asthenospheric layer.

The method according to the invention may comprise one or more of the following features, taken solely or according to any potential technical combinations:

- the step for obtaining the geometry of the asthenospheric and lithospheric layers and of the sediment layers of the passive margin area at the current time comprises processing and interpreting seismic data of the passive margin area and/or well data from at least one well located in the passive margin area;
- the step for computing at least the geometry of the sediments layers comprises decompacting the sediment layers by backstripping;
- the first thermal parameter and/or the second thermal parameter is chosen among a heat flow rate, a heat flux, a temperature and/or a temperature gradient;
- the first thermal and/or the second thermal parameter are computed as a function of time;
- the computed geometry of the asthenospheric and lithospheric layers and of the sediment layers are three-dimension geometries;
- the steps for computing the first thermal parameter and/or computing the second thermal parameter comprise calibrating the computed first thermal parameter and/or the second thermal parameter respectively in the sediment layer and/or in the asthenospheric and lithospheric layers with at least one thermal data acquired in a control well;

- the method further comprises a step for controlling the computed first thermal parameter in the sediment layer with at least one vitrinite reflectance measurement made on at least one sample from the sediment layer.

The invention further relates to a method for exploring oil and gas in a passive margin area, said method comprising the following steps:

- computing a first thermal parameter at a predetermined time of a period of time in at least one sediment layer of a plurality of sediment layers of the passive margin area with the method as described above,
- targeting at least one exploration area of the passive margin area using the determined first thermal parameter or a parameter computed using said first thermal parameter,
- drilling said exploration area of the passive margin area.

The invention also deals with a system for computing a first thermal parameter at a predetermined time of a period of time in at least one sediment layer of a plurality of sediment layers of a passive margin area, said passive margin area comprising an asthenospheric layer covered by a lithospheric layer separated by said asthenospheric layer by a first interface, said lithospheric layer being covered at least partially by said plurality of sediment layers and separated from said plurality of sediment layers by a second interface, the period of time starting at the beginning of the formation of the passive margin area and finishing at the current time, the system comprising:

- a current geometry module for obtaining a geometry of the asthenospheric and lithospheric layers and of the sediment layers of the passive margin area at the current time,
- an asthenospheric-lithospheric module for computing at least a geometry of the asthenospheric and lithospheric layers for the at least one predetermined time using a rifting model and at least the obtained geometry of the asthenospheric and lithospheric layers at the current time,
- an asthenospheric-lithospheric thermal module for computing a second thermal parameter in the asthenospheric and lithospheric layers for the at least one predetermined time using the computed geometry of the asthenospheric and lithospheric layers,
- a sediment module for computing at least a geometry of the sediments layers for the at least one predetermined time using a geodynamic basin model and at least the geometry of the sediment layers obtained at the current time and the computed geometry of the asthenospheric and lithospheric layers,
- a sediment thermal module for computing the first thermal parameter in the at least one sediment layer of the plurality of sediment layers for the at least one predetermined time using the computed geometry of the sediment layers and the value of the computed second thermal parameter at the second interface between the lithospheric layer and the sediment layers or at the first interface between the lithospheric layer and the asthenospheric layer.

The system according to the invention may comprise one or more of the following features, taken solely or according to any potential technical combinations:

- the system further comprises a calibrating module for calibrating the computed first thermal parameter and/or the second thermal parameter respectively in the sediment layer and/or in the asthenospheric and lithospheric layers with at least one thermal data acquired in a control well;
- the system further comprises a controlling module for controlling the computed first thermal parameter in the sediment layer with at least one vitrinite reflectance measurement made on at least one sample from the sediment layer.

Finally, the invention also relates to a computer program product comprising instructions, when the program is executed by a computer, cause the computer to carry out the method for computing a first thermal parameter at a predetermined time of a period of time in at least one sediment layer of a plurality of sediment layers of a passive margin area, as described above.

The invention will be better understood, based on the following description, given solely as an example, and made in reference to the following drawings, in which:

- figure 1 is a schematic cross-section of a passive margin area,
- figure 2 is a schematic representation of a system according to the invention,
- figure 3 is a flowchart of a method according to the invention, and
- Figure 4 is a graph representing porosity versus depth of burial.

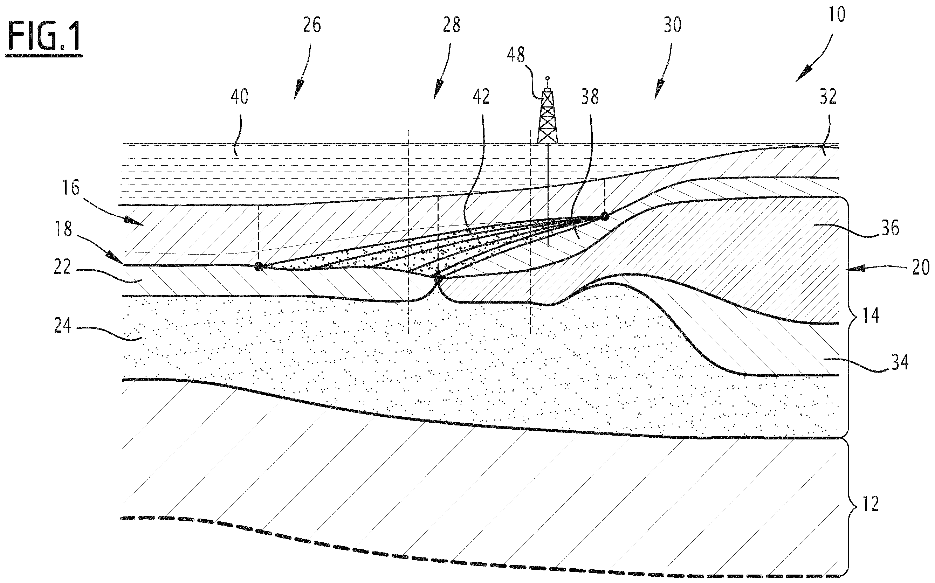

Figure 1 shows a schematic cross-section of a passive margin area 10 at a current time.

The passive margin area 10 comprises an asthenospheric layer 12, a lithospheric layer 14 covering the asthenospheric layer 12, and a plurality of sediments layer 16 covering at least partially the lithospheric layer 14.

The asthenospheric layer 12 and the lithospheric layer 14 are separated by a first interface.

The lithospheric layer 14 and the sediment layers 16 are separated by a second interface 18.

The lithospheric layer 14 comprises the continental crust 20 or the oceanic crust 22 and the upper mantle 24.

More specifically, the passive margin area 10 is formed by the juxtaposition of an oceanic domain 26, an ocean-continent transition (OCT) domain 28 and a continental domain 30.

The oceanic domain 26 comprises the oceanic crust 22 covered by post-rift sediment layers 32.

In the continental domain 30, the continental crust 22 comprises a lower continental crust 34 and an upper continental crust 36 covered by syn-rift sediment layers 38 and post-rift sediment layers 32.

The oceanic domain 26 and the OCT domain 28 are covered by a body of water 40. The continental domain 30 is partially covered by the body of water 40. The body of water 40 is a sea or an ocean for example.

The passive margin area 10 comprises a sedimentary prism 42 formed by a plurality of late syn-rift to early post-rift sediment layers 46. These sediment layers extend in the OCT domain 28 and in a part of the oceanic domain 26 and of the continental domain 30.

The sedimentary prism 42 has substantially an inverted triangle shape in the cross section of figure 1, with its summit directed downwards.

The plurality of sediment layers 16 forming the sedimentary prism 42 have deposited during a period of time. For example, the period of time is comprised between 5 million years (myr) and 20 myr, for example 10 myr.

The passive margin area 10 may comprise at least one calibration well 48. The calibration well 48 is bored through the sediment layers 16 and preferably crosses the plurality of sediment layers 16. Generally, the calibration well 48 is located in the proximal zone, i.e. in the continental domain 30. The length of the calibration well 48 is for example comprised between 2000 m and 8000 m.

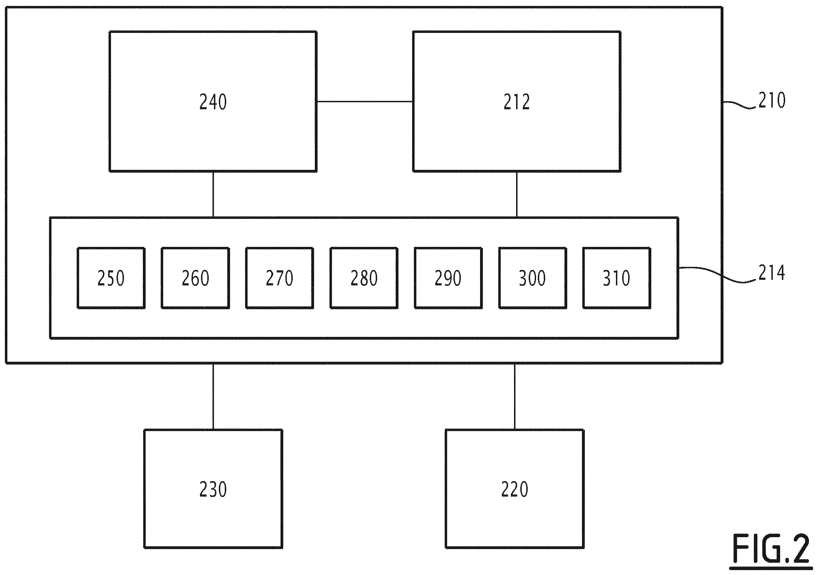

Figure 2 shows a system 200 for computing a first thermal parameter at a predetermined time of a period of time in at least one sediment layer 16 of a plurality of sediment layers 16 of a passive margin area 10, according to the invention. The passive margin area 10 is modelled with a geologic model comprising cells.

The system 200 comprises a calculator 210, a display unit 220 connected to the calculator 210 to display the results provided by the calculator 210 and a man-machine interface 230.

The first thermal parameter is for example chosen among a heat flow rate, a heat flux, a temperature and/or a temperature gradient, at the predetermined time.

The temperature corresponds to the mean temperature evaluated in a given cell of the model.

At first order, the temperature gradient is the slope of the temperature evolution with depth. In a variant, it can also be lateral if advection has a strong impact.

The heat flow is the amount of heat passing from one cell to another cell of the model for a given thermal conductivity.

At first order, the heat flow gradient is the slope of the heat flow evolution with depth. In a variant, it can also be lateral if advection has a strong impact.

The calculator 210 comprises a database 240.

The database 240 is moreover able to store the results provided by the calculator 210.

In the example of figure 2, the database 240 is a local database comprised in the calculator 210. In a variant (not shown), the database 240 is a remote database connected to the calculator 210 by a network.

The calculator 210 comprises a processor 212 and a memory 214 receiving software modules. The processor 212 is able to execute the software modules received in the memory 214 to carry out the method according to the invention.

The memory 214 comprises a current geometry module 250 for obtaining a geometry of the asthenospheric and lithospheric layers 12, 14 and of the sediment layers 16 of the passive margin area 10 at the current time.

Typically, as explained in details later, the current geometry of the asthenospheric and lithospheric layers 12, 14 and of the sediment layers 16 is obtained by processing and interpreting seismic data and/or data measurement in wells. The current geometry of the asthenospheric and lithospheric layer 12, 14 and of the sediment layers 16 is preferably stored in the database 240, and loaded when required.

The memory 214 comprises an asthenospheric-lithospheric module 260 for computing at least a geometry of the asthenospheric and lithospheric layers 12, 14 for the at least one predetermined time using a rifting model and at least the obtained geometry of the asthenospheric and lithospheric layers at the current time obtained with the current geometry module 250.

The computed geometry of the asthenospheric and lithospheric layers 12, 14 is typically stored in the database 240.

The memory 214 also contains an asthenospheric-lithospheric thermal module 270 for computing a second thermal parameter in the asthenospheric and lithospheric layers 12, 14 for the at least one predetermined time, using the computed geometry of the asthenospheric and lithospheric layers 12, 14 computed with the asthenospheric-lithospheric module 260.

The second thermal parameter is chosen among a heat flow rate, a heat flux, a temperature and/or a temperature gradient, as defined above.

The second thermal parameter may be of the same category as the first thermal parameter, e.g, the first thermal parameter is a heat flow rate and the second thermal parameter is a heat flow rate.

In a variant, the second thermal parameter and the first thermal parameter are not of the same category.

The memory 214 further comprises a sediment module 280 for computing at least a geometry of the sediments layers 16 for the at least one predetermined time using a geodynamic basin model and at least the geometry of the sediment layers 16 obtained at the current time with current geometry module 250.

The computed geometry of the sediment layers 16 is constrained at least by the computed geometry of the asthenospheric and lithospheric layers 12, 14 computed with the asthenospheric-lithospheric module 260, as it will detailed later.

The computed geometry of the sediments layers 16 is typically stored in the database 240.

Then, the memory 214 comprises a sediment thermal module 290 for computing the first thermal parameter in the at least one sediment layer 16 of the plurality of sediment layers 16 for the at least one predetermined time using the computed geometry of the sediment layers 16 computed with the sediment module 280 and the value of the computed second thermal parameter at the second interface 18 between the lithospheric layer 12 and the sediment layers 16 or at the first interface between the asthenospheric layer 12 and the lithospheric layer 14, both being computed with the asthenospheric module 260.

The computed first thermal parameter is typically stored in the database 240.

Advantageously, the memory 214 may comprise a calibrating module 300 for calibrating the computed first thermal parameter and/or the second thermal parameter respectively in the sediment layer 16 and/or in the asthenospheric and lithospheric layers 12, 14 with at least one thermal data acquired in a control well 48.

Moreover, the memory may also comprise a controlling module 310 for controlling the computed first thermal parameter in the sediment layer 16 with at least one vitrinite reflectance measurement made on at least one sample from the sediment layer 16, preferably sampled from at least one calibrating well 48.

The display unit 220 is for example able to display any input or output of any modules.

Typically, the display unit 220 is standard computer screen.

The man-machine interface 230 typically comprises a keyboard, a mouse and/or a touch screen to allow the user to activate the calculator 210 and the various software modules contained in the memory 214 to be processed by the processor 212.

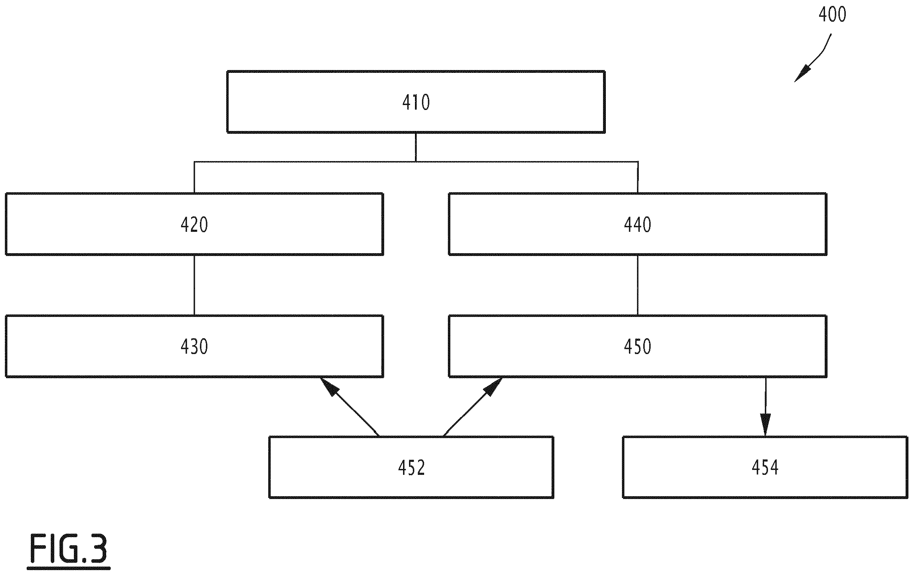

A flow chart of a method 400 for computing a first thermal parameter at a predetermined time of a period of time in at least one sediment layer 16 of a plurality of sediment layers 16 of a passive margin area 10, according to the invention, carried out with a system 200 as described above, is shown in figure 3.

The method 400 comprises a step for obtaining 410 a geometry of the asthenospheric and lithospheric layers 12, 14 and of the sediment layers 16 of the passive margin area 10 at the current time.

Preferably, the geometry of the asthenospheric and lithospheric layers 12, 14 and of the sediment layers 16 at the current time is obtained by processing and interpreting seismic data of the passive margin area 10 and/or well data from at least one well 48 located in the passive margin area 10.

For example, the geometry of the asthenospheric and lithospheric layers 12, 14 and of the sediments 16 is obtained by processing a plurality of parallel or sub-parallel two-dimension (2D) seismic lines located over the passive margin area 10.

The processing of the seismic lines is classical, known of the skilled person and will not be detailed here.

The processing of the seismic lines are for example interpreted using classical seismic interpretation software such as Sismage®, Petrel®, Gocad® or Voxelgeo®.

The interpretation comprises a global structural analysis of the passive margin area 10 in order to define the various domain of the passive margin area 10 and their limits. This structural analysis is made by picking the seismic reflectors on each seismic line.

This picking allows defining the first interface between asthenospheric layer 12 and the lithospheric layer 14, and the second interface between the lithospheric layer 14 and the plurality of sediment layers 16.

The interpretation also comprises picking the seismic reflectors in the plurality of layers and more particularly in the sedimentary prism 42. The seismic reflectors are more or less clear reflectors that are fan shaped with a common convergence point continentward, situated on the top surface of the syn-rift sediment sequence.

In a variant, the seismic data are 3D seismic data or the 2D seismic data are directly processed in 3D. Such 3D interpretation may be performed using the same kind of software mentioned above.

The method 400 according to the invention comprises a step for computing 420 at least a geometry of the asthenospheric and lithospheric layers 12, 14 for the at least one predetermined time using a rifting model and at least the obtained geometry of the asthenospheric and lithospheric layers 12, 14 at the current time.

Preferably, the method 400 comprises computing the geometry of the asthenospheric and lithospheric layers 12, 14 at a plurality of predetermined times of the period of time.

The rifting model is for example a kinematic numerical model that simulates material of the lithospheric and asthenospheric layers 12, 14 during continental rifting until breakup by setting multiple successive or simultaneous deformation events of finite duration. The deformation of the asthenospheric and lithospheric layers 12, 14 follows prescribed flow velocity fields which are for example pre-generated in a finite element model using a layered Newtonian viscosity profile.

For example, the finite element model is a two-dimension model. In a variant, the finite element model is a three-dimension model.

Typically, two flow velocity fields are generated for pure shear and buoyancy upwelling of the asthenospheric layer 12. Pure shear is the main deformation mode which results in a passive upwelling beneath a deformation area, while buoyancy induced upwelling adds active lithospheric layer 14 thinning to pure shear.

The rifting model is configured to compute crustal thinning, decompression melting and subsidence.

Decompression melting is for example parametrized following "An new parameterization of hydrous mantle melting" by Katz et al., Geochemistry, Geophysics, Geosystem, 4(9), 2003. Once generated, the melt may be entirely or partially extracted to the surface or stored beneath the Moho as underplated material. Advantageously, the rifting model is configured to model melt infiltration in the continental crust.

The skilled person may find information regarding the crustal thinning and the subsidence processes in a margin context in P.A. Allen & J.R. Allen, 2013, Basin Analysis: Principles and Application to Petroleum Play Assessment, Wiley-Blackwell eds., 633p; in Brune et al, Rifted margin architecture and crustal rheology: reviewing Iberia-NewFoundland, Central South Atlantic, and South China Sea, 2017, Marine and petroleum geology, http://dx.doi.org/10.1016/j.marpetgeo.2016.10.018 or in Lavier et al, 2019, Controls on the Thermomechanical Evolution of Hyperextended Lithosphere at Magma-Poor Rifted Margins: the Example of Esperito Santo and the Kwanza Basins, Geochemistry Geophysics Geosystems, 20, https://doi.org/10.1029/2019GC008580.

The rifting model may also model faulting in the lithospheric layer 14 to improve the margin area geometry.

Advantageously, the step 420 for computing comprises a first calibrating step 422 for calibrating the geometry of the asthenospheric and lithospheric layers 12, 14 using seismic data and/or well data.

For example, reflection and/or seismic data are used. Such kind of data allow calibration of several interfaces such as the top of the continental crust (basement), the Moho, the lithospheric layer/asthenospheric layer boundary, etc.

Advantageously, the step 420 for computing comprises a second calibrating step 424 for calibrating the geometry of the asthenospheric and lithospheric layers 12, 14 with a total amount of extension of the margin area and/or at least one strain rate of the margin area 10. Preferably, the calibration step 424 comprises applying different strain rates along the period of time.

The method 400 according to the invention comprises computing 430 a second thermal parameter in the asthenospheric and lithospheric layers 14 for the at least one predetermined time using the computed geometry of the asthenospheric and lithospheric layers 12, 14 at the predetermined time.

The step 430 for computing the second thermal parameter comprises solving the heat equation for the asthenospheric and lithospheric layers 12, 14.

The input parameters for solving the heat equation are for example thermal conductivity and heat capacity of asthenospheric and lithospheric layers 12, 14 and radiogenic condition, including radiogenic flux for the asthenospheric and lithospheric layers 12, 14.

Preferably, the step 430 for computing the second thermal parameter comprises fixing an isotherm between two geological layers as a bottom limit condition.

For example, the step 430 for computing the second thermal parameter comprises using the asthenospheric layer 12/lithospheric layer 14 limit as a bottom limit condition and fixing preferably said limit at 1330°C.

The limit between the asthenospheric layer 12 and the lithospheric layer 14 is moving during the formation of the passive margin area 10. More particularly, the limit moves up during the formation of the passive margin area 10.

In variant, the step 430 for computing the second thermal parameter comprises using a plurality of isotherms as limit conditions.

The step 430 for computing the second thermal parameter comprises obtaining the second thermal parameter at the top of the lithospheric layer 14, i.e. the second interface between the lithospheric layer 14 and the plurality of layers 16 at the predetermined time or at the bottom of the lithospheric layer 14, i.e. the first interface between the asthenospheric layer 12 and the lithospheric layer 12 at the predetermined time.

The method 400 further comprises a step of computing 440 at least a geometry of the sediments layers 16 for the at least one predetermined time using a geodynamic basin model and at least the geometry of the sediment layers 16 obtained at the current time, the computed geometry of the sediment layers 16 being constrained at least by the computed geometry of the asthenospheric and lithospheric layers 12, 14.

For example, this step 440 comprises computing a sedimentation rate throughout the period of time for the passive margin area 10.

Preferably, the step for computing the sedimentation rate in the passive margin area comprises a step for decompacting the plurality of sediments layers 16 in the passive margin area 10 by back stripping using the current geometry of the plurality of sediment layers 16.

For example, the step comprises obtaining the lithological content of the plurality of sediment layers 16 at the calibration well 48 determined from samples sampled at the calibration well 48.

The step for decompacting allows taking into account the successive compaction of the sediments layers 16 along time, each time a new sediment layer 16 covers a previous sediment 16 layer throughout the deposit of the plurality of sediment layers 16.

For example, for the decompacting step by backstripping, the method developed by Van Hinte, 1978, Geohistory Analysis-Application of Micropaleontology in exploration Geology, AAPG Bulletin 62(2), is applied.

More particularly, the decompacting step comprises obtaining the porosity of the sedimentary prism 42. To determine the porosity, a lithological log in the calibration well 48 is obtained, for example, through an electro-facies study.

Electro-facies study is based on the correlation between gamma-ray log and rock resistivity log. By combining the two logs, a first order lithologic log may be obtained. The method divides the drilled rock column into four different major lithologies: sand, sandy shale, marl and limestone. The division is very brief but sufficiently accurate to perform a decompaction of the sedimentary prism 42.

For each sediment layer 16, the relative content for each four lithologies is obtained in the calibration well 48.

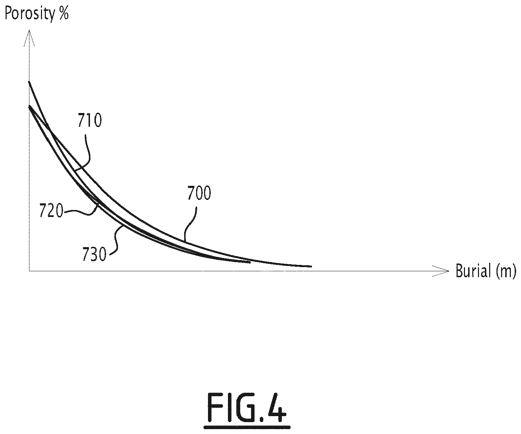

Depth of burial versus porosity curves for the four different lithologies composing the prism are used. These curves can be determined empirically. They are simple exponential relationship. Figure 4 shows the depth of burial versus porosity for sand 700, sandy shale 710, marl 720 and limestone 730.

The porosity of each sediment layer may be computed using the following equation: $\Phi^{layer} = c^{sand}\Phi^{sand} + c^{sandy\ shale}\Phi^{sandy\ shale} + c^{marl}\Phi^{marl} + c^{limestone}\Phi^{limestone}$ $c^{sand}$, $c^{sandy\ shale}$, $c^{marl}$, $c^{limestone}$ are the relative content for the four lithologies and $\Phi^{sand}$, $\Phi^{sandy\ shale}$, $\Phi^{marl}$ and $\Phi^{limestone}$ are the porosity determined with the depth of burial versus porosity curves of Figure 4.

The original thickness of the sediment layer 16 is related to the current thickness by the following equation:

$$T_{deposit} = T_{current} \frac{1 - \Phi^{current}}{1 - \Phi^{deposit}}$$

$T_{current}$ is the current thickness of the sediment layer, advantageously obtained by the current geometry of the sedimentary prism. $\Phi^{current}$ and $\Phi^{deposit}$ are respectively the current porosity and the original porosity of the sediment layer, computed with the previous equation.

Thanks to this method, the sedimentation rate is computed for the whole passive margin area.

The step for decompacting the sediments described below is a first order method. In variant, a more precise method may be used for decompacting the sediments. For example, it may be improved by dividing the prims into more layers and decompacting one layer after each other one from the top to the base.

The skilled person can find information regarding the modeling of sedimentary basin for example in Hantschel, T.; Kauerauf, A.I. Fundamentals of Basin and Petroleum Systems Modeling; Springer Science & Business Media: Berlin/Heidelberg, Germany, 2009, in P.A. Allen & J.R. Allen, 2013, Basin Analysis : Principles and Application to Petroleum Play Assessment, Wiley-Blackwell eds., 633p., or in F. Schneider, S. Wolf, I. Faille, D.

Pot, A 3D Basin Model for Hydrocarbon Potential Evaluation: Application to Congo Offshore, 2000, Oil and Gas Science and Technology, vol55, pp. 3-13.

Finally, the method 400 comprises computing 450 the first thermal parameter in the at least one sediment layer 16 of the plurality of sediment layers 16 for the at least one predetermined time using the computed geometry of the sediment layers 16 at the predetermined time and the value of the computed second thermal parameter of the lithospheric layer 14 at the second interface 18 between the lithospheric layer 14 and the sediment layers 16 at the predetermined time, or at the first interface between the asthenospheric layer 12 and the lithospheric layer 12 at the predetermined time.

Preferably, the method 400 comprises computing 450 the first thermal parameter in the at least one sediment layer 16 at a plurality predetermined times of the period of time. In other words, the first thermal parameter, and then the second thermal parameter are computed as a function of time

The step for computing 450 the first thermal parameter comprises solving the heat equation for the sediment layers 16.

The input parameters for solving the heat equation are for example thermal conductivity of each sediment layers 16, heat capacity of each sediment layers 16 and radiogenic condition, including radiogenic flux for each sediment layers 16.

The value of the computed second thermal parameter at the second interface 18 between the lithospheric layer 14 and the sediment layers 16 is the bottom limit condition of the second thermal parameter modeling.

In a variant, the value of the computed second thermal parameter at the first interface 18 between the lithospheric layer 14 and the asthenospheric layer 12 is the bottom limit condition of the second thermal parameter modeling.

The upper limit condition is for example the temperature evolution at the atmosphere-hydrosphere interface through the period of time.

Preferably, the step 450 for computing the first thermal parameter comprises a step for calibrating 452 the computed first thermal parameter in the sediment layer 16 with at least one thermal data acquired in at least one control well 48.

The thermal data is for example at least one bottom hole temperature and/or one temperature gradient and/or one heat flux.

Advantageously, the method then comprises controlling the computed first thermal parameter in the sediment layer 16 with at least one vitrinite reflectance measurement made on at least one sample from the sediment layer 16, preferably sampled from at least one calibrating well 48.

Vitrinite is one of the primary components of coals and sedimentary rocks and formed by organic components. The study of vitrinite reflectance allows identifying the maximum temperature history of sediments. It can be used as an indicator of maturity in hydrocarbon source rocks.

The invention also relates to a method for exploring oil and gas in the passive margin area 10.

The method comprises computing their first thermal parameter at least at predetermined time of the period of time in at least one sediment layer 16 of a plurality of sediment layers 16 of the passive margin area 10 with the method described above.

Preferably, the method computing said first thermal parameter for a plurality of times of the period of time. It allows obtaining the thermal history of the sediment layer 16.

As explained above, the thermal history of the sediment layers 16 is closely linked to the maturation of the organic matter and is then a good indicator of the presence of oil and gas and of their current state in the passive margin area 10.

The method then comprises targeting at least one exploration area of the passive margin area using the determined first thermal parameter, for example the maximal temperature over the predetermined period of time, or a parameter computed using said first thermal parameter, for example related to the maturity.

Finally, the method comprises drilling said exploration area of the passive margin area for exploring oil and gas potential of the area.

The method according to the invention is particularly advantageous since it allows using current geometry of the passive margin area 10 and calibration data such as well data to obtain the history of the passive margin area in terms of deformation and thermicity by closely coupling them. Thermicity of the passive margin area is a key factor for the oil and gas exploration of the passive margin area 10 since this process controls the location and the characteristics of potential oil and gas petroleum systems in this area.

## Claims

1.   A method (400) for computing a first thermal parameter at a predetermined time of a period of time in at least one sediment layer (16) of a plurality of sediment layers (16) of a passive margin area (10), said passive margin area (10) comprising an asthenospheric layer (12) covered by a lithospheric layer (14) separated by said asthenospheric layer (12) by a first interface, said lithospheric layer (14) being covered at least partially by said plurality of sediment layers (16) and separated from said plurality of sediment layers (16) by a second interface (18), the period of time starting at the beginning of the formation of the passive margin area (10) and finishing at the current time, the method (400) being carried out by a system (200) for computing the at least one first thermal parameter, the method (400) comprising the following steps:

- obtaining (410) a geometry of the asthenospheric and lithospheric layers (12, 14) and of the sediment layers (16) of the passive margin area (10) at the current time,
- computing (420) at least a geometry of the asthenospheric and lithospheric layers (12, 14) for the at least one predetermined time using a rifting model and at least the obtained geometry of the asthenospheric and lithospheric layers (12, 14) at the current time,
- computing (430) a second thermal parameter in the asthenospheric and lithospheric layers (12, 14) for the at least one predetermined time using the computed geometry of the asthenospheric and lithospheric layers (12, 14),
- computing (440) at least a geometry of the sediments layers (16) for the at least one predetermined time using a geodynamic basin model and at least the geometry of the sediment layers (16) obtained at the current time and the computed geometry of the asthenospheric and lithospheric layers (12, 14),
- computing (450) the first thermal parameter in the at least one sediment layer (16) of the plurality of sediment layers (16) for the at least one predetermined time using the computed geometry of the sediment layers (16) and the value of the computed second thermal parameter of the lithospheric layer (14) at the second interface (18) between the lithospheric layer (14) and the sediment layers (16) or at the first interface between the lithospheric layer (14) and the asthenospheric layer (12).

2.   The method (400) according to claim 1, wherein the step (410) for obtaining the geometry of the asthenospheric and lithospheric layers (12, 14) and of the sediment layers (16) of the passive margin area (10) at the current time comprises processing and interpreting seismic data of the passive margin area (10) and/or well data from at least one well (48) located in the passive margin area (10).

3.   The method (400) according to claims 1 or 2, wherein the step (440) for computing at least the geometry of the sediments layers (16) comprises decompacting the sediment layers (16) by backstripping.

4.   The method (400) according to any one of the preceding claims, wherein the first thermal parameter and/or the second thermal parameter is chosen among a heat flow rate, a heat flux, a temperature and/or a temperature gradient.

5.   The method (400) according to any one of the preceding claims, wherein the first thermal and/or the second thermal parameter are computed as a function of time.

**6.** The method (400) according to any one of the preceding claims, wherein the computed geometry of the asthenospheric and lithospheric layers (12, 14) and of the sediment layers (16) are three-dimension geometries.

**7.** The method (400) according to any one of the preceding claims, wherein the steps (430, 450) for computing the first thermal parameter and/or computing the second thermal parameter comprise calibrating the computed first thermal parameter and/or the second thermal parameter respectively in the sediment layer (16) and/or in the asthenospheric and lithospheric layers (12, 14) with at least one thermal data acquired in a control well (48).

**8.** The method according to any one of the preceding claims, further comprising a step for controlling the computed first thermal parameter in the sediment layer (16) with at least one vitrinite reflectance measurement made on at least one sample from the sediment layer (16).

**9.** A method for exploring oil and gas in a passive margin area, said method comprising the following steps:

- computing a first thermal parameter at a predetermined time of a period of time in at least one sediment layer (16) of a plurality of sediment layers (16) of the passive margin area (10) with the method according to any one of claims 1 to 8,
- targeting at least one exploration area of the passive margin area (10) using the determined first thermal parameter or a parameter computed using said first thermal parameter,
- drilling said exploration area of the passive margin area (10).

**10.** A system (200) for computing a first thermal parameter at a predetermined time of a period of time in at least one sediment layer (16) of a plurality of sediment layers (16) of a passive margin area (10), said passive margin area (10) comprising an asthenospheric layer (12) covered by a lithospheric layer (14) separated by said asthenospheric layer (12) by a first interface, said lithospheric layer (14) being covered at least partially by said plurality of sediment layers (16) and separated from said plurality of sediment layers (16) by a second interface (18), the period of time starting at the beginning of the formation of the passive margin area (10) and finishing at the current time, the system (200) comprising:

- a current geometry module (250) for obtaining a geometry of the asthenospheric and lithospheric layers (12, 14) and of the sediment layers (16) of the passive margin area (10) at the current time,

- an asthenospheric-lithospheric module (260) for computing at least a geometry of the asthenospheric and lithospheric layers (12, 14) for the at least one predetermined time using a rifting model and at least the obtained geometry of the asthenospheric and lithospheric layers (12, 14) at the current time,
- an asthenospheric-lithospheric thermal module (270) for computing a second thermal parameter in the asthenospheric and lithospheric layers (12, 14) for the at least one predetermined time using the computed geometry of the asthenospheric and lithospheric layers (12, 14),
- a sediment module (280) for computing at least a geometry of the sediments layers (16) for the at least one predetermined time using a geodynamic basin model and at least the geometry of the sediment layers (16) obtained at the current time and the computed geometry of the asthenospheric and lithospheric layers (12, 14),
- a sediment thermal module (290) for computing the first thermal parameter in the at least one sediment layer (16) of the plurality of sediment layers (16) for the at least one predetermined time using the computed geometry of the sediment layers (16) and the value of the computed second thermal parameter at the second interface (18) between the lithospheric layer (14) and the sediment layers (16) or at the first interface between the lithospheric layer (14) and the asthenospheric layer (12).

**11.** The system (200) according to claim 10, further comprising a calibrating module (300) for calibrating the computed first thermal parameter and/or the second thermal parameter respectively in the sediment layer (16) and/or in the asthenospheric and lithospheric layers (12, 14) with at least one thermal data acquired in a control well (48).

**12.** The system (200) according to claim 10 or 11, further comprising a controlling module (310) for controlling the computed first thermal parameter in the sediment layer (16) with at least one vitrinite reflectance measurement made on at least one sample from the sediment layer (16).

**13.** A computer program product comprising instructions which, when the program is executed by a computer, cause the computer to carry out the method (400) according to any one of claims 1 to 8.

FIG.1

EP 3 933 452 A1

FIG.2

FIG.3

EP 3 933 452 A1

Porosity %

710

700

720

730

Burial (m)

FIG.4

Europäisches
Patentamt

European
Patent Office

Office européen
des brevets

# EUROPEAN SEARCH REPORT

Application Number

EP 20 30 5747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/070534 A1 (TOTAL SA [FR]) 9 April 2020 (2020-04-09) | 1-7, 9-11,13 | INV. G01V99/00 |
| Y | * abstract * * figures 1-4 * * page 1, line 28 - page 2, line 23 * * page 7, line 33 - page 8, line 2 * * page 14, line 1 - line 3 * ----- | 8,12 | |
| Y | HIRSCH K K ET AL: "Tectonic subsidence history and thermal evolution of the Orange Basin", MARINE AND PETROLEUM GEOLOGY, BUTTERWORTH SCIENTIFIC, GUILDFORD, GB, vol. 27, no. 3, 1 March 2010 (2010-03-01), pages 565-584, XP026965992, ISSN: 0264-8172 [retrieved on 2009-07-15] | 8,12 | |
| A | * abstract * * figure 21 * * 1. Introduction * * page 570; table 1 * * 4.2. Forward models; page 571 * * 4.3.Heat flow; page 571 * * 5.2.3.2. 112-93 Ma.; page 577 - page 578 * * 5.2.3.5. 67-16 Ma.; page 578 * * 5.2.4. Implications for hydrocarbon generation; page 580 * ----- -/-- | 1-7, 9-11,13 | TECHNICAL FIELDS SEARCHED (IPC) G01V |

The present search report has been drawn up for all claims

| Place of search | Date of completion of the search | Examiner |
|---|---|---|
| The Hague | 21 December 2020 | Hustedt, Bernhard |

EPO FORM 1503 03.82 (P04C01)

page 1 of 2

Europäisches
Patentamt

European
Patent Office

Office européen
des brevets

**EUROPEAN SEARCH REPORT**

Application Number

EP 20 30 5747

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | BRUNE et al.: "Rifted margin architecture and crustal rheology: reviewing Iberia-NewFoundland, Central South Atlantic, and South China Sea", Marine and petroleum geology, 2017, XP002801531, Retrieved from the Internet: URL:https://www.sciencedirect.com/science/article/pii/S0264817216303579 * the whole document * ----- | 1-13 | |

TECHNICAL FIELDS
SEARCHED     (IPC)

The present search report has been drawn up for all claims

| Place of search | Date of completion of the search | Examiner |
|---|---|---|
| The Hague | 21 December 2020 | Hustedt, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 30 5747

This annex lists the patent family members relating to the patent documents cited in the above-mentioned European search report.
The members are as contained in the European Patent Office EDP file on
The European Patent Office is in no way liable for these particulars which are merely given for the purpose of information.

21-12-2020

| Patent document cited in search report | Publication date | Patent family member(s) | Publication date |
|---|---|---|---|
| WO 2020070534 A1 | 09-04-2020 | NONE | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KATZ et al.** n new parameterization of hydrous mantle melting. *Geochemistry, Geophysics, Geosystem,* 2003, vol. 4 (9
- **P.A. ALLEN ; J.R. ALLEN.** Basin Analysis: Principles and Application to Petroleum Play Assessment. Wiley-Blackwell, 2013, 633p
- **BRUNE et al.** Rifted margin architecture and crustal rheology: reviewing Iberia-NewFoundland. *Marine and petroleum geology,* 2017, http://dx.doi.org/10.1016/j.marpetgeo.2016.10.018
- **LAVIER et al.** Controls on the Thermomechanical Evolution of Hyperextended Lithosphere at Magma-Poor Rifted Margins: the Example of Esperito Santo and the Kwanza Basins. *Geochemistry Geophysics Geosystems,* 2019, vol. 20, https://doi.org/10.1029/2019GC008580

- **VAN HINTE.** Geohistory Analysis-Application of Micropaleontology in exploration Geology. *AAPG Bulletin,* 1978, vol. 62 (2
- **HANTSCHEL, T. ; KAUERAUF, A.I.** Fundamentals of Basin and Petroleum Systems Modeling. Springer Science, 2009
- **P.A. ALLEN ; J.R. ALLEN.** Basin Analysis : Principles and Application to Petroleum Play Assessment. 2013, 633p
- **F. SCHNEIDER ; S. WOLF ; I. FAILLE ; D. POT.** A 3D Basin Model for Hydrocarbon Potential Evaluation: Application to Congo Offshore. *Oil and Gas Science and Technology,* 2000, vol. 55, 3-13